# EUROPÄISCHE PATENTSCHRIFT

(11) **EP 3 248 271 B1**
(45) Veröffentlichungstag und Bekanntmachung des Hinweises auf die Patenterteilung: **15.12.2021**
(21) Anmeldenummer: 16713426.1
(22) Anmeldetag: 31.03.2016
(51) Int. Cl.: H02K 1/32, H02K 15/00

(54) **ROTOR EINER ASYNCHRONMASCHINE**
ROTOR OF AN ASYNCHRONOUS MACHINE
ROTOR D'UNE MACHINE ASYNCHRONE

(30) Priorität: 14.04.2015 EP 15163462
(43) Veröffentlichungstag der Anmeldung: 29.11.2017
(73) Patentinhaber: Siemens Aktiengesellschaft, 80333 München (DE)
(72) Erfinder: SCHERER, Matthias, 90459 Nürnberg (DE); NIEDERMEYER, Josef, 91161 Hilpoltstein (DE); SCHARF, Uwe, 91126 Schwabach (DE)
(86) Internationale Anmeldenummer: PCT/EP2016/056999
(87) Internationale Veröffentlichungsnummer: WO 2016/165947

(56) Entgegenhaltungen:
- EP-A1- 0 703 659
- EP-A1- 2 434 618
- EP-A1- 2 744 089
- DE-A1-102009 051 488
- DE-C- 321 731
- US-A- 4 362 959

## Beschreibung

Die Erfindung betrifft einen Rotor einer Asynchronmaschine, eine Asynchronmaschine mit einem derartigen Rotor, sowie ein Herstellungsverfahren zur Herstellung eines derartigen Rotors.

Asynchronmaschinen mit Käfigläufern bilden aufgrund ihres einfachen Aufbaus robuste Motoren und sind deshalb für eine Vielzahl von Anwendungen geeignet.

Um ein ausreichendes Anlaufmoment dieser Maschine zu erzeugen, werden u.a. Hochstabläufer eingesetzt, die jedoch vergleichsweise hohe radiale Nuten aufweisen, in denen rechteckförmige oder keilförmige Stäbe vorhanden sind. Aufgrund der radialen Höhe dieser Nuten sind die zwischen zwei Nuten ausgebildeten Zähne im Bereich des Nutgrundes vergleichsweise schmal ausgebildet. Dadurch stellen sich u.a. dort Sättigungseffekte im Blech des Rotors ein, die das Betriebsverhalten dieser Maschine beeinträchtigen.

Um die Energieeffizienz der Asynchronmaschinen zu steigern, werden außerdem Kupferhybridmotoren eingesetzt, wobei bei größeren Motoren, insbesondere größeren Achshöhen, das Problem besteht, dass die Anbindung zwischen den unterschiedlichen leitfähigen Materialien, wie z.B. Kupferstab und Aluminium vergleichsweise schwierig ist. Daher müssen die Kupferstäbe eine besondere geometrische Gestaltung aufweisen, die aber die Herstellung eines derartigen Läufers verteuert.

Die oben genannten Hybridmotoren werden dabei mit Kupferstäben versehen, die in eine dafür vorgesehene Nut im Läufer des Motors vergleichsweise locker eingebracht werden. Anschließend werden die elektrischen Verbindungen, sowie die Fixierungen der Kupferstäbe in der Nut mittels eines Aluminiumdruckgussverfahrens hergestellt. Das Aluminium umschließt dabei den Kupferstab in der Nut und bildet außerhalb, also an den Stirnseiten des Läufers den sogenannten Kurzschlussring zur Verbindung der Stäbe untereinander.

Bei größeren Maschinen, insbesondere größeren Achshöhen müssen aufgrund der schwierigen Anbindung zwischen Kupfer und Aluminium die Kupferstäbe mit einer besonderen Beschichtung eingesetzt werden.

Nachteilig dabei ist somit das aufwändige Herstellverfahren für Asynchronmaschinen mit Käfigläufern, insbesondere für Wirkungsklassen dieser Asynchronmaschinen ab IE4.

Aus der DE 10 2009 051 488 A1 ist ein Käfigläufer für eine Asynchronmaschine bekannt, wobei der Käfigläufer ein Läufer Blechpaket mit in axialer Richtung des Käfigläufer gestapelten Elektroblechen mit Nuten einer ersten Nutquerschnittsfläche umfasst, wobei in den Nuten jeweils eine am Nutrand anliegende Nuteinlage vorgesehen ist, die die erste Nutquerschnittsfläche auf eine zweite Nutquerschnittsfläche reduziert.

Aus der US 4 362 959 ist ein Läufer einer Asynchronmaschine bekannt, bei der zwischen Teilblechpaketen Abstandshalter vorgesehen sind.

Ausgehend davon liegt der Erfindung die Aufgabe zugrunde, einen Rotor einer Asynchronmaschine zu schaffen, bei der in einfacher Art und Weise ein Käfigläufer und damit eine Asynchronmaschine herstellbar ist, die auch Energieeffizienzklassen dieser Asynchronmaschinen ab IE4 erfüllt.

Die Lösung der gestellten Aufgabe gelingt durch ein Verfahren nach Anspruch 1 und einen Rotor nach Anspruch 2.

Es werden somit erfindungsgemäß hohle Stäbe mit vergleichsweise hoher elektrischer Leitfähigkeit, insbesondere Kupferhohlstäbe in die Nuten des Blechpakets des Rotors eingesetzt und mit einem weiteren leitfähigen Material, vorzugsweise Aluminium mittels eines Druckgussverfahrens ausgefüllt.

Durch den Anpressdruck zwischen, in diesem Fall Aluminium und Kupfer sind ev. notwendige Beschichtungen um Abrisseffekte zwischen diesen Materialien zu vermeiden, nicht oder nur zum Teil notwendig.

Erfindungsgemäß ist nun das elektrisch leitfähige Material, wie z.B. Kupfer, das als Hohlprofil vorliegt, an den Seitenwänden der Nuten des Rotors angeordnet, wo auch dann aufgrund des Skineffekts der Wechselstrom des Hauptstromflusses auftritt. Dieser ist gemeinhin im Kurzschlussläufer bei Nennbetrieb der Asynchronmaschine sehr gering.

Die erfindungsgemäße Ausgestaltung des Rotors/Läufers bietet insbesondere bei Überlast oder im Anlauf der Asynchronmaschine Vorteile. Die mit Überlast einhergehende Erhöhung des Schlupfes der Asynchronmaschine führt zu einer Vergrößerung des genannten Skineffekts/Stromverdrängung im Läufer. Aufgrund des nun dort vorhandenen Materials mit vergleichsweise höherer elektrischer Leitfähigkeit erwärmt sich nunmehr der Rotor und damit die Asynchronmaschine langsamer und kann somit einer Überlastung länger standhalten.

Grundsätzlich ist im Anlaufvorgang der Schlupf der Asynchronmaschine maximal und damit auch die thermische Belastung des Läufers aufgrund der starken Stromverdrängung an den radialen Rand der Nuten des Läufers. Für den Anlaufvorgang ist es deshalb vorteilhaft, dass das vergleichsweise schlechtere leitfähige Material, wie z.B. Aluminium sich vor allem möglichst nahe am Außendurchmesser des Läufers befindet, um einen vergleichsweise schnellen Hochlauf der Maschine gewährleisten zu können. Die elektrische Parallelschaltung des elektrisch leitfähigeren Materials erlaubt erfindungsgemäß das elektrisch weniger leitfähigere Material weit an den radialen Rand der Nut bringen zu können und dabei dennoch am gesamten Rand der Nut geringere Strom-Wärme-Verluste zu erhalten.

Der erfindungsgemäß damit ausgestatteten Asynchronmaschine ist es nun möglich, den Anlaufvorgang thermisch länger zu "verkraften" und in Folge davon gegen größere Trägheitsmomente hochlaufen zu können.

Durch die erfindungsgemäße Ausgestaltung eines Leiters in einer Nut des Rotors ist nunmehr ein Teil des Nutquerschnitts durch das Hohlprofil eingenommen. Das eingegossene Material sollte aufgrund von Fertigungsrahmenbedingungen und elektrischen Gründen zumindest ein Drittel des Nutquerschnitts einnehmen.

Somit sind nunmehr auch parallelflankige Zähne im Rotor möglich, ohne dass Sättigungseffekte im Blech des Rotors auftreten. Auch dies wird erfindungsgemäß dadurch erreicht, dass unterschiedlich leitfähige Materialien in der Nut angeordnet sind, die demnach bei vergleichsweise reduzierter Höhe der Nut ein hohes Anlaufmoment der Asynchronmaschine gewährleisten.

In einer nicht zur Erfindung gehörenden Ausgestaltung weist das Hohlprofil einen zumindest abschnittsweise axial verlaufenden Schlitz auf, so dass die Aufweitung in einfacher Art und Weise auch mit geringeren Drücken erfolgen kann. Dabei kann der im Wesentlichen axial verlaufende Schlitz durchaus bis zu ca. einem Drittel des Umfangs des Hohlprofils einnehmen. Dabei ist immer noch gewährleistet, dass sich während des Herstellungsverfahrens beim Innenhochdruckfügen das Hohlprofil an die jeweiligen Seitenwände der Nut anschmiegt. Für den Anlaufvorgang ist es in einer derartigen Ausführung deshalb vorteilhaft, dass das vergleichsweise schlechtere leitfähige Material, wie z.B. Aluminium sich vor allem möglichst nahe am Außendurchmesser des Rotors befindet, um einen vergleichsweise schnellen Hochlauf der Maschine gewährleisten zu können. Die elektrische Parallelschaltung des elektrisch leitfähigeren Materials erlaubt erfindungsgemäß das elektrisch weniger leitfähigere Material weit an den radialen Rand der Nut, also in Bereich des Luftspaltes bringen zu können und dabei dennoch am gesamten Randbereich der Nut geringere Strom-Wärme-Verluste zu erhalten.

In einer erfindungsgemäßen Ausgestaltung ist der Rotor in axialer Richtung aus mehreren Teilblechpaketen gebildet, die jeweils durch einen Kühlspalt voneinander beabstandet sind. Dieser Kühlspalt beinhaltet nunmehr zwei Vorteile, zum einen kann damit ein Kühlsystem, insbesondere des Rotors dahingehend realisiert werden, dass der axiale in Kühlkanäle des Rotors strömende Kühlstrom über die radialen Kühlspalte austritt und über den Luftspalt der dynamoelektrischen Maschine beispielsweise in radiale Kühlspalte des Stators eintritt.

Der weitere Vorteil besteht darin, dass erfindungsgemäß diese Hohlprofile, wenn sie in Umfangsrichtung betrachtet geschlossen ausgeführt sind, diese Kühlspalte überbrücken. Beim anschließenden Aluminiumdruckgussverfahren muss nunmehr nicht das Problem gelöst werden, dass der Aluminiumdruckguss über die radialen Kühlspalte austritt bzw. der Spalt zwischen zwei Teilblechpaketen abgedichtet werden muss.

Ebenso ist es bei Rotoren mit mehreren axial hintereinander angeordneten Teilblechpaketen möglich, jedes Teilblechpaket wie einen eigenen Rotor herzustellen und erfindungsgemäß auszuprägen, um anschließend die Teilblechpakete miteinander zu verschweißen, zu verlöten etc. Dabei weist z.B. jedes Teilblechpaket an seinen Stirnseiten einen Kurzschlussring auf. Entscheidend ist dabei, dass nunmehr zwischen den Teilblechpaketen eine elektrisch leitende Scheibe oder Ring vorhanden ist, der die jeweiligen aus den benachbarten Teilblechpaketen austretenden Leiter bzw. Leiterstäbe elektrisch miteinander verbindet.

Damit lassen sich in einfacher Weise gestaffelte Rotoren für Asynchronmaschinen bereitstellen, wobei jedes Teilblechpaket des Rotors gegenüber dem axial davor angeordneten Teilblechpaket um einen vorgegebenen Winkel in Umfangsrichtung verdreht angeordnet werden kann.

Vorteilhafterweise weist das Hohlrohr in Umfangsrichtung betrachtet alternativ oder ergänzend dazu unterschiedliche Wandstärke auf, so dass dies auch implizit die Stromverdrängung innerhalb des Leiters einer Nut des Rotors beeinflusst.

Das Verfahren zur Herstellung eines erfindungsgemäßen Rotors weist nunmehr den Vorteil auf, dass die Hohlprofile durch Aluminiumdruckguss nicht nur gefüllt, sondern auch gleichzeitig geweitet und mit dem Aufweiten des Hohlleiters gleichzeitig einen Formschluss zwischen den Seitenwänden der Nut herstellen.

Durch den Aluminiumdruckguss wird dabei nicht nur der Hohlleiter mit Aluminium gefüllt, sondern es werden dabei auch an den Stirnseiten des Rotors die Kurzschlussringe gebildet, die die benachbarten Stäbe miteinander elektrisch leitend verbinden. Um einen vorteilhaften Form- und Reibschluss zwischen den Hohlprofilen und dem Kurzschlussring zu erhalten, weisen zum einen die Hohlprofile einen axialen Überstand über das Blechpaket auf. Und zum anderen sind insbesondere die Enden dieser Hohlprofile mit oberflächenvergrößernden Strukturen versehen, die die Haftung des Hohlprofils innerhalb des Kurzschlussrings verbessern.

Durch das erfindungsgemäße Herstellen eines Rotors sind nunmehr aufgrund des Schrumpfens des Aluminiums beim Abkühlen Abrisseffekte zwischen den unterschiedlichen Materialien auszuschließen.

Die vorgegebenen Hohlprofile, insbesondere Kupferhohlprofile sind dabei Standardprofile und können mittels dieses Innendruck-Hochdruckfügens so verformt werden, dass sie formschlüssig mit den Seitenwänden der Nut abschließen. Die Hohlprofile können dabei als Standardprofile ausgeführt sein - ebenso können sie unterschiedlichste Querschnittsformen aufweisen, wie rundlich, eckig, trapezförmig etc.

Durch die erfindungsgemäße Ausgestaltung eines Leiters in einer Nut des Rotors ist nunmehr ein Teil des Nutquerschnitts durch das Hohlprofil eingenommen. Das eingegossene Material, also z.B. Aluminium sollte aufgrund von Fertigungsrahmenbedingungen, wie Fließfähigkeit dieses Materials und elektrischen Gründen zumindest ein Drittel des Nutquerschnitts einnehmen.

Der prinzipielle Aufbau des Rotors lässt sich auch auf Aufbau und Herstellung eines Stators von Asynchronmaschinen oder Synchronmaschinen übertragen, der nunmehr hohle Formstäbe aufweist und dementsprechend lediglich nach dem Innenhochdruckfügen -insbesondere durch Aluminium - Leiterstäbe in den Nuten des Stators bilden. An den Stirnseiten des Blechpakets des Stators also im Wickelkopfbereich werden diese Leiterstäbe nach einem vorgegebenen Schaltplan elektrisch kontaktiert, indem sie verlötet oder mit Laschen oder Litzen oder Formstäben miteinander elektrisch leitend verbunden werden.

Die Erfindung sowie weitere vorteilhafte Ausgestaltungen der Erfindung werden anhand mehrerer Ausführungsbeispiele näher beschrieben. Dabei zeigen:
- FIG 1: einem prinzipiellen Längsschnitt einer Asynchronmaschine,
- FIG 2: den prinzipiellen Aufbau eines Rotors im Längsschnitt,
- FIG 3: einen prinzipiellen Längsschnitt eines Rotors mit Teilblechpaketen,
- FIG 4 und 5: Detailausschnitte eines Kurzschlussrings,
- FIG 6 bis 10: Herstellungsverfahren,
- FIG 11 bis 13: ein weiteres nicht erfindungsgemäßes Herstellungsverfahren,
- FIG 14: ein Detailausschnitt einer nicht erfindungsgemäßen Nut,
- FIG 15: perspektivische Darstellung eines nicht erfindungsgemäßen Hohlstabes,
- FIG 16: perspektivische Darstellung eines Hohlstabes.

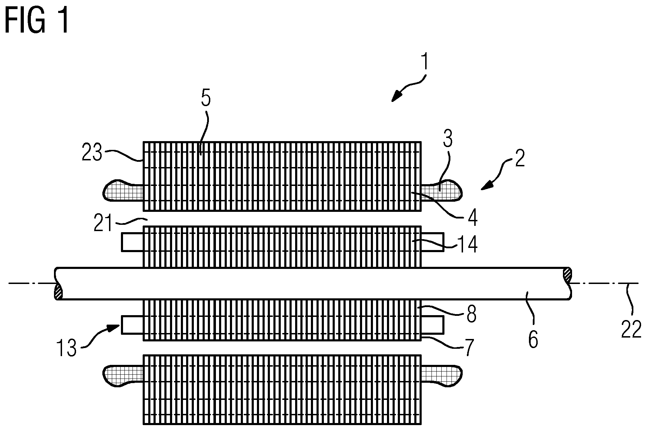

FIG 1 zeigt in einem prinzipiellen Längsschnitt eine dynamoelektrische Maschine 1, die als Asynchronmaschine mit einem Käfigläufer ausgeführt ist, und im Wesentlichen die elektrischen und magnetischen Aktivteile dieser dynamoelektrischen Maschine 1. Nicht dargestellt sind somit Lager, Gehäuse, Lüfter etc., die ebenfalls zur Ausstattung einer funktionsfähigen dynamoelektrischen Maschine 1 gehören.

Auf einer Welle 6 ist ein Rotor 7 bzw. Läufer drehfest angeordnet, der um eine Achse 22 drehbar ist. In axialer Richtung weist der Rotor 7 ein Blechpaket 8 auf, das aus axial gestapelten Blechen besteht, die in im Wesentlichen axialer Richtung verlaufende Nuten 14 aufweisen. Des Weiteren sind im Blechpaket von Rotor 7 und/oder Stator 23 im Wesentlichen axial verlaufende Kühlkanäle vorhanden, die aber in dieser Darstellung nur zum Teil dargestellt sind.

Der Luftstrom durch die Kühlkanäle von Stator 23 und/oder Rotor 7 durch deren axial verlaufenden Kühlkanäle 5 ist durch dementsprechend angebrachte Lüfter eigen- oder fremderzeugt.

In den Nuten 14 des Rotors 7 befinden sich elektrische Leiter, die über Kurzschlussringe 13 an den jeweiligen Stirnseiten des Rotors 7 elektrisch leitend miteinander verbunden sind. Der Stator 23 weist in Nuten 4 des Stators 23 ein angeordnetes Wicklungssystem 2 auf, das an den Stirnseiten des Stators 23 Wickelköpfe 3 ausbildet. Dieses Wicklungssystem 2 erzeugt Magnetfelder, die über einen Luftspalt 21 hinweg mit dem Rotor 7 und dessen Kurzschlusskäfig in elektromagnetischer Wechselwirkung stehen. Durch elektromagnetische Wechselwirkung im Betrieb der dynamoelektrischen Maschine 1, insbesondere des Stators 23 über den Luftspalt 21 hinweg zum Rotor 7 findet eine Rotation des Rotors 7 um die Achse 22 statt.

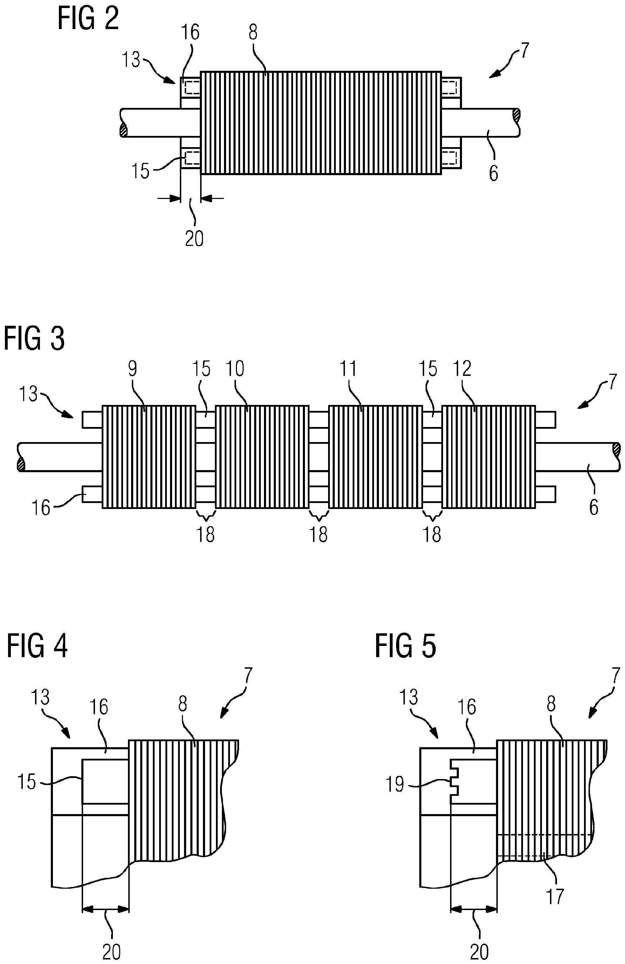

FIG 2 zeigt einen Rotor 7 mit seinem Kurzschlusskäfig und seiner drehfesten Verbindung auf seiner Welle 6. Axial aus den Stirnseiten des Rotors 7, respektive aus dem Blechpaket 8 des Rotors 7 treten Leiterstäbe 15 aus, die aus zumindest zwei Materialen unterschiedlicher elektrischer Leitfähigkeit aufgebaut sind. Einem ersten Material mit einer ersten elektrischen Leitfähigkeit und einem Material mit einer zweiten elektrischen Leitfähigkeit, wobei das Material mit der ersten elektrischen Leitfähigkeit das Material mit der besseren elektrischen Leitfähigkeit ist.

In einer konkreten Ausführung ist das Material mit einen ersten elektrischen Leitfähigkeit Kupfer, während das Material mit einer vergleichsweise schlechteren elektrischen Leitfähigkeit Aluminium ist.

Die aus dem Blechpaket 8 des Rotors 7 tretenden Leiterstäbe 15 sind mit einem Materials 16 - also z.B. Aluminium - mit einer zweiten elektrischen Leitfähigkeit ausgegossen und bilden so einen Kurzschlussring 13. Die Leiterstäbe 15 sind im Wesentlichen - zunächst - hohl ausgeführt und werden dann sowohl im Kurzschlussring 13, als auch innerhalb der Leiterstäbe 15 mit dem Material mit zweiter elektrischer Leitfähigkeit ausgegossen. Dabei ist das Material mit zweiter elektrischer Leitfähigkeit Aluminium, während der Leiterstab 15 als ein Kupferhohlprofil ausgebildet ist.

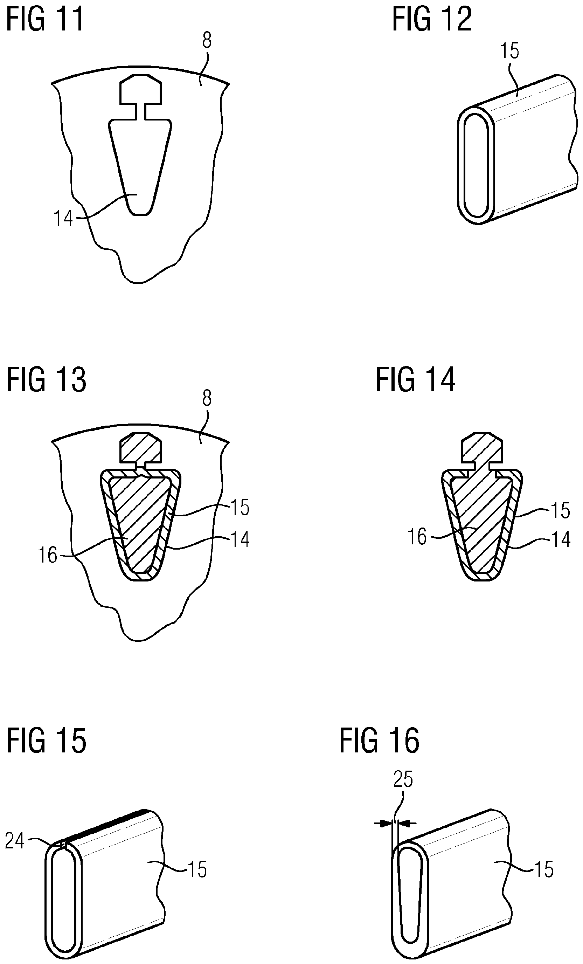

Somit weist ein Leiterstab 15 mit einem geschlossenen Umfang (also ohne Schlitz 24 gemäß FIG 15) und einer gleichmäßigen Wanddicke (im Gegensatz zu FIG 16) an seinem radial äußeren Umfang eine erhöhte elektrische Leitfähigkeit gegenüber dem Aluminium mit vergleichsweise geringer elektrischer Leitfähigkeit im inneren des Leiterstabes 15 auf.

FIG 4 zeigt in einer Detaildarstellung den axialen Überstand 20 des Leiterstabes 15 in den Kurzschlussring 13.

Ebenso zeigt FIG 5 einen axialen Überstand 20 eines Leiterstabs 15 in den Kurzschlussring 13, wobei der Leiterstab 15 in diesem Ausführungsbeispiel im Bereich des Kurzschlussringes 13 speziell oberflächenvergrößerte Strukturen 19 an seinem Ende und/oder innerhalb seines axialen Überstandes 20 aufweist, um eine dementsprechend verbesserte Haftung innerhalb des Kurzschlussrings 13 zu erhalten. Angedeutet ist in FIG 5 ebenfalls, ein im Wesentlichen axial verlaufender Kühlkanal 17 des Rotors 7.

FIG 3 zeigt in einer erfindungsgemäßen Ausführung einen Rotor 7, der durch vier Teilblechpakete 9, 10, 11 und 12 gebildet ist. An den Stirnseiten des Rotors 7 befinden sich weiterhin die Kurzschlussringe 13. Zwischen den Teilblechpaketen 9, 10, 11 und 12 befinden sich radiale Kühlschlitze 18, die die Teilblechpakete 9, 10, 11 und 12 voneinander beabstanden. Bei Herstellung eines derartigen Rotors 7 werden nunmehr die Teilblechpakete 9, 10, 11 und 12 stanzpaketiert, optional jetzt oder nach dem Ausgießen mit der Welle 6 drehfest verbunden. Nunmehr werden die hohlen Leiterstäbe 15 mit vergleichsweise hoher elektrischer Leitfähigkeit - also insbesondere Kupferhohlprofile in die mehr oder weniger axial fluchtenden Nuten 14 des Rotors 7 eingesetzt. Für das Ausgießen mit einem Material mit vergleichsweise geringerer elektrischer Leitfähigkeit fungiert erfindungsgemäß nunmehr der Leiterstab 15 gleichzeitig als eine Abdichtung im Bereich der Kühlschlitze 18 für dieses eingegossene Material mit verringerter Leitfähigkeit. Die Kupferhohlprofile werden auch hier entweder separat oder durch das Aluminiumdruckgussverfahren ausgeweitet und derart gestaltet, dass sich nunmehr der Belag also die Wände des Hohlprofils des Leiterstabes 15 formschlüssig an die Seitenwände der jeweiligen Nut 14 schmiegt.

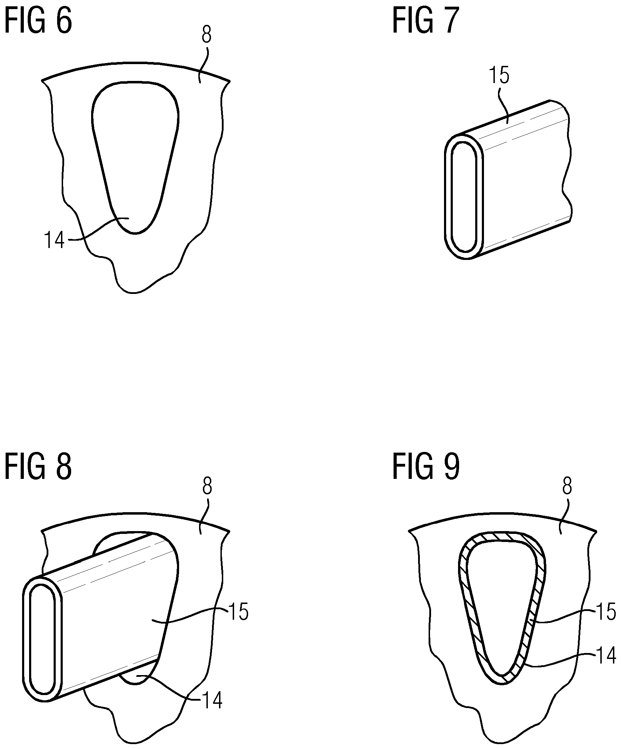

In FIG 6 bis FIG 9 ist prinzipiell ein Herstellungsverfahren anhand einer einzelnen Nut 14 dargestellt, das sowohl für Rotoren 7 gemäß FIG 2, als auch für Rotoren 7 gemäß FIG 3, 4, 5 als auch grundsätzlich für Statoren angezogen werden kann.

Gemäß FIG 6 liegt ein Blechpaket 8 mit axial verlaufenden Nuten 14 vor, in das nunmehr ein Hohlprofil gemäß FIG 7, insbesondere ein Hohlstab aus Kupfer in das Blechpaket 8 gemäß FIG 8 eingesetzt wird. Dieses Hohlprofil wird mittels eines Hochdruckfügevorgang ausgeweitet und derart gestaltet, dass sich nunmehr der Belag also die Wände des Hohlprofils des Stabes 15 formschlüssig an die Seitenwände der Nut 14 schmiegt.

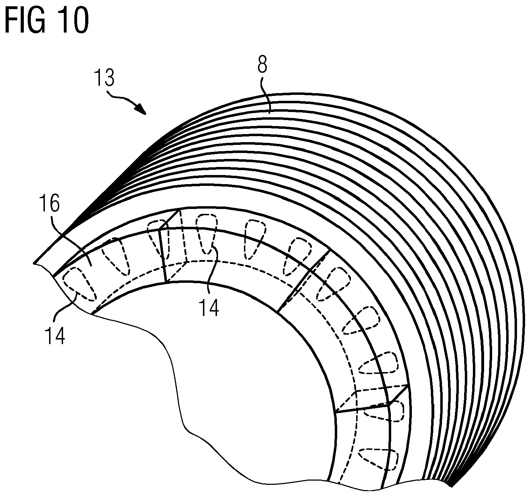

Durch Ausgießen des verbleibenden Hohlraumes innerhalb des Hohlprofils, insbesondere des Leiterstabes 15 und gleichzeitiges Mitangießen der Kurzschlussringe 13 an die Stirnseite des Rotors 7 entsteht in einfacher Art und Weise ein Käfigläufer, wie er in einer teilperspektivischen Darstellung gemäß FIG 10 gezeigt ist. Dieser Käfigläufer weist nunmehr Leiterstäbe 15 auf, die an ihrem äußeren Rand in der Nut 14 ein vergleichsweise elektrisch gut leitfähiges Material aufweisen, wohingegen im Rest der Nut 14 ein vergleichsweise schlecht leitendes Material vorhanden ist.

Aus darstellerischen Gründen zeigt FIG 10 keine aus der Nut 14 ragenden Hohlprofile. Des Weiteren zeigt FIG 10 zur Verdeutlichung angedeutete Querschnittsflächen des Kurzschlussrings 13, die keine Schnittflächen des Kurzschlussrings 13 darstellen sollen.

Der Kurzschlussring 13 ist gemäß FIG 10 aber auch gemäß FIG 4 oder FIG 5 direkt an der Stirnseite des Blechpakets des Rotors 7 angeordnet. Es ist ebenso möglich den Kurzschlussring 13 axial von der Stirnseite des Blechpakets anzuordnen. Dabei ragen dann die Hohlprofile 15 aus der Nut 14 und treten erst nach einem vorgegebenen axialen Abstand in den Kurzschlussring 13.

FIG 11 bis FIG 13 zeigen den Einsatz nicht zur Erfindung gehörender anderer Nutformen, wobei ein spezieller Anlaufkäfig mitgestaltet wird, wobei für den Normalbetriebszustand weiterhin das leitfähige Kupfer am radial äußeren Rand der Nut 14 vorgesehen ist. Auch hier liegt ein Blechpaket 8 mit axial verlaufenden Nuten 14 vor, in das nunmehr ein Hohlprofil - also der Leiterstab 15 - , insbesondere ein Hohlstab aus Kupfer eingesetzt wird. Dieses Hohlprofil wird mittels eines Hochdruckfügevorgang derart gestaltet und ausgeweitet, dass sich nunmehr der Belag des Hohlprofils des Leiterstabes 15 formschlüssig an die Seitenwände der Nut 14, in diesem Fall des unteren Teils der Doppelnut des Rotors 7 schmiegt. Der von dem unteren Teil der Nut 14 abgeschlossene obere Teil wird ebenso mit Aluminium ausgegossen.

In FIG 14 wurde ein nicht zur Erfindung gehörender hohler Leiterstab 15 mit einem axial verlaufenden Schlitz 24 gemäß FIG 15 eingesetzt. Damit ist das eingegossene Material im unteren und oberen Teil der Nut 14 im Gegensatz zu FIG 13 im Kontakt und kann insbesondere in einem Gießvorgang hergestellt werden.

Ein hohler Leiterstab 15 gemäß FIG 16 weist in Umfangsrichtung betrachtet unterschiedliche Wandstärken 25 auf, was u.a. letztendlich eine Optimierung des Anlaufverhaltens einer Asynchronmaschine gestattet.

Auch sind Kombinationen der Ausführungen der Hohlprofile betreffend Wandstärken, Querschnitte, Materialien etc. innerhalb eines Rotors 7 oder innerhalb einer Nut 14 vorstellbar.

Die hier gezeigten Nutformen sind nicht einschränkend auszulegen; vielmehr ist die Erfindung auch bei Blechpaketen von Rotoren mit anderen Nutformen wie Keilstabnuten, Doppelnuten, Doppelstabnuten, Tropfenstabnuten und bei Hochstabnuten einzusetzen.

Grundsätzlich ist der erfinderische Gedanke auch auf Statoren von Asynchronmaschinen oder Synchronmaschinen anwendbar.

Aufgrund seines vorteilhaften Überlast- und Anlaufverhaltens auch gegen Lastmomente werden Asynchronmotoren mit derartigen Rotoren, insbesondere bei E-Cars, Traktionsantrieben, aber auch bei Kränen, Aufzügen, Förderbändern oder Zentrifugen eingesetzt.

## Patentansprüche

1. Verfahren zur Herstellung eines Rotors (7) einer Asynchronmaschine mit zumindest einem Käfigläufer, wobei der Rotor (7) zumindest ein Blechpaket (8) aufweist mit im wesentlichen axial verlaufenden Leitern, die in Nuten (14) des Rotors (7) angeordnet sind und wobei die Leiter mindestens zwei Materialien unterschiedlicher elektrischer Leitfähigkeit aufweisen, wobei in Umfangsrichtung betrachtet das Material mit höherer elektrischer Leitfähigkeit, das Material mit geringer elektrischer Leitfähigkeit zumindest zu 65% umgibt, durch folgende Schritte:
- Stanzpaketieren von Teilblechpaket (9,10,11,12),
- axiales Ausrichten der Nuten (14) des Rotors (7),
- axiales Einsetzen von Hohlrohren mit hoher elektrischer Leitfähigkeit, insbesondere von Kupferrohren in die Nuten (14) der Teilblechpakete derart, dass die Teilblechpakete auf einem Leiter angeordnet sind, wobei zwischen den Teilblechpaketen ein vorgegebener Abstand (18) eingestellt ist,
- Aufweiten des Hohlrohres mittels Hochdruck,
- Eingießen von Material mit geringerer elektrischer Leitfähigkeit als das des Hohlrohrs, wobei das Hohlrohr durch das Material gefüllt wird und gleichzeitig die Kurzschlussringe (13) an der Stirnseite des Rotors (7) mit ausgebildet werden,
- wobei durch Eingießen von Material mit geringerer elektrischer Leitfähigkeit als das des Hohlrohrs, insbesondere durch Aluminiumdruckguss diese Hohlrohre gleichzeitig aufgeweitet werden und einen formschlüssigen Kontakt der Hohlrohre mit den Seitenwänden der Nuten (14) bilden.

2. Rotor (7) einer Asynchronmaschine mit zumindest einem Käfigläufer, hergestellt nach einem Verfahren nach Anspruch 1, wobei der Rotor (7) zumindest ein Blechpaket (8) aufweist mit im wesentlichen axial verlaufenden Leitern, die in Nuten (14) des Rotors (7) angeordnet sind und wobei die Leiter mindestens zwei Materialien unterschiedlicher elektrischer Leitfähigkeit aufweisen, wobei in Umfangsrichtung betrachtet das Material mit höherer elektrischer Leitfähigkeit, das Material mit geringer elektrischer Leitfähigkeit zumindest zu 65% umgibt, wobei das Blechpaket (8) des Rotors (7) aus mehreren Stanzpaketierten Teilblechpaketen (9,10,11,12) gebildet ist, wobei die Nuten (14) des Rotors (7) axial ausgerichtet sind, wobei Hohlrohre mit hoher elektrischer Leitfähigkeit, insbesondere Kupferrohre in den Nuten (14) der Teilblechpakete angeordnet sind, derart, dass die Teilblechpakete auf einem Leiter angeordnet sind, wobei zwischen den Teilblechpaketen ein vorgebbarer Abstand (18) eingestellt ist, wobei die Hohlrohre mittels Hochdruck aufgeweitet sind, indem durch Eingießen von Material mit geringerer elektrischer Leitfähigkeit als die des Hohlrohres, insbesondere durch Aluminiumdruckguss diese Hohlachse aufgeweitet wurden und einen formschlüssigen Kontakt der Hohlrohre mit den Seitenwänden der Nuten (14) bilden, wobei das Material mit geringerer elektrischer Leitfähigkeit als die des Hohlrohres, das Hohlrohr füllt und gleichzeitig die Kurzschlussringe (13) an der Stirnseite des Rotors (7) mit ausbildet.

3. Rotor (7) nach Anspruch 2, **dadurch gekennzeichnet, dass** sich das Blechpaket (8) in axialer Richtung aus mehreren Teilblechpaketen (9,10,11,12) zusammensetzt, die jeweils durch einen radialen Kühlspalt voneinander beabstandet sind.

4. Rotor (7) nach Anspruch 2 bis 3, **dadurch gekennzeichnet, dass** das Hohlrohr in Umfangsrichtung betrachtet unterschiedliche Wandstärken aufweist.

5. Rotor (7) nach einem der vorhergehenden Ansprüche, **dadurch gekennzeichnet, dass** zumindest einige Nuten (14) des Rotors (8)an ihrem radial äußeren Rand, insbesondere zu einem Luftspalt (21) der Asynchronmaschine gewandt, zumindest abschnittsweise teilgeöffnet sind.

6. Asynchronmaschine mit einem Rotor (7) nach einem der vorhergehenden Ansprüche 2 bis 5.

7. Verwendung eines Rotors nach einem oder mehrerer der vorhergehenden Ansprüche 2 bis 5 bei Asynchronmotoren, insbesondere bei Antrieben von E-Cars, Traktionsantrieben, Kränen, Aufzügen, Förderbändern oder Zentrifugen.

## Claims

1. Method for producing a rotor (7) of an asynchronous machine with at least one cage rotor, wherein the rotor (7) has at least one laminated core (8) with substantially axially extending conductors, which are arranged in slots (14) in the rotor (7) and wherein the conductors have at least two materials of different electrical conductivities, wherein the material with the higher electrical conductivity surrounds the material with the lower electrical conductivity by at least 75% when considered in the circumferential direction, by means of the following steps:
- punch-lamination of a partial laminated core (9,10,11,12),
- axial alignment of the slots (14) in the rotor (7),
- axial insertion of hollow pipes with high electrical conductivity, in particular copper pipes, in the slots (14) of the partial laminated cores such that the partial laminated cores are arranged on a conductor, wherein a predetermined spacing (18) is established between the partial laminated cores,
- expansion of the hollow pipe by means of high pressure,
- casting-in of material with lower electrical conductivity than that of the hollow pipe, wherein the hollow pipe is filled by the material and simultaneously the end rings (13) are also formed on the end face of the rotor (7),
- wherein due to casting-in of material with lower electrical conductivity than that of the hollow pipe, in particular aluminium diecasting, these hollow pipes are simultaneously expanded and form a positive contact between the hollow pipes and the side walls of the slots (14).

2. Rotor (7) of an asynchronous machine with at least one cage rotor, produced according to a method according to claim 1, wherein the rotor (7) has at least one laminated core (8) with substantially axially extending conductors, which are arranged in slots (14) in the rotor (7) and wherein the conductors comprise at least two materials of different electrical conductivities, wherein the material with the higher electrical conductivity surrounds the material with the lower electrical conductivity by at least 65% when considered in the circumferential direction, wherein the laminated core (8) in the rotor is formed from a plurality of punch-laminated partial laminated cores (9,10,11,12), wherein the slots (14) in the rotor (7) are axially aligned, wherein hollow pipes with high electrical conductivity, in particular copper pipes, are arranged in the slots (14) of the partial laminated cores such that the partial laminated cores are arranged on a conductor, wherein a predetermined spacing (18) is established between the partial laminated cores, wherein the hollow pipes are expanded by means of high pressure, wherein due to casting-in of material with lower electrical conductivity than that of the hollow pipe, in particular aluminium diecasting, these hollow axles have been expanded and form a positive contact between the hollow pipes and the side walls of the slots (14), wherein the material with the lower electrical conductivity than that of the hollow pipe fills the hollow pipe and simultaneously the end rings (13) are also formed on the end face of the rotor (7).

3. Rotor (7) according to claim 2, **characterised in that**, in the axial direction, the laminated core (8) is formed from a plurality of partial laminated cores (9,10,11,12) in each case spaced apart from one another by a radial cooling gap.

4. Rotor (7) according to claim 2 to 3, **characterised in that** the hollow pipe has different wall thicknesses when considered in the circumferential direction.

5. Rotor (7) according to one of the preceding claims, **characterised in that** at least some slots (14) in the rotor (8), in particular facing an air gap (21) of the asynchronous machine, are partially open at least in sections at their radially outer edge.

6. Asynchronous machine with a rotor (7) according to one of the preceding claims 2 to 5.

7. Use of a rotor according to one or more of the preceding claims 2 to 5 in asynchronous motors, in particular in drives of e-cars, traction drives, cranes, elevators, conveyors or centrifuges.

## Revendications

1. Procédé de fabrication d'un rotor (7) d'une machine asynchrone comprenant au moins un rotor à cage d'écureuil, dans lequel le rotor (7) a au moins un paquet (8) de tôle ayant des conducteurs s'étendant sensiblement axialement, qui sont disposées dans des encoches (14) du rotor (7) et dans lequel les conducteurs ont au moins deux matériaux de conductivité électrique différente, dans lequel, considéré dans la direction du pourtour, le matériau ayant la conductivité électrique la plus grande entoure au moins pour 65 % le matériau ayant la conductivité électrique la plus petite, par les stades suivants :
- assemblage par estampage de paquets (9, 10, 11, 12) de tôle partiels,
- orientation axiale des encoches (14) du rotor (7),
- insertion axiale de tubes creux de grande conductivité électrique, notamment de tubes en cuivre, dans les encoches (14) des paquets de tôle partiels de manière à ce que les paquets de tôle partiels soient disposés sur un conducteur, dans lequel une distance (18) donnée à l'avance est réglée entre les paquets de tôle partiels,
- élargissement du tube creux au moyen d'une haute pression,
- coulée de matériau de plus petite conductivité électrique que celui du tube creux, dans lequel le tube creux est rempli du matériau et en même temps les anneaux (13) de coupe-circuit en sont constitués sur le côté frontal du rotor (7),
- dans lequel par coulée de matériau de conductivité électrique plus petite que celui du tube creux, notamment par coulée d'aluminium sous pression, ces tubes creux sont élargis en même temps et forment un contact à complémentarité de forme des tubes creux avec les parois latérales des encoches (14).

2. Rotor (7) d'une machine asynchrone ayant au moins un rotor à cage d'écureuil, fabriqué selon un procédé suivant la revendication 1, dans lequel le rotor (7) a au moins un paquet (8) de tôle ayant des conducteurs s'étendant sensiblement axialement, qui sont disposés dans des encoches (14) du rotor (7) et dans lequel les conducteurs ont au moins deux matériaux de conductivité électrique différente, dans lequel, considéré dans la direction du pourtour, le matériau de plus grande conductivité électrique entoure au moins pour 65 % le matériau de conductivité électrique plus petite, dans lequel le paquet (8) de tôle du rotor (7) est constitué de plusieurs paquets (9, 10, 11, 12) de tôle partiels assemblés en paquets par estampage, dans lequel les encoches (14) du rotor (7) sont orientées axialement, dans lequel des tubes creux de grande conductivité électrique, notamment des tubes en cuivre, sont disposés dans les encoches (14) des paquets de tôle partiels, de manière à ce que les paquets de tôle partiels soient disposés sur un conducteur, dans lequel une distance (18) pouvant être donnée à l'avance est réglée entre les paquets de tôle partiels, dans lequel les tubes creux sont élargis au moyen d'une haute pression par le fait que, par coulée de matériau de conductivité électrique plus petite que celle du tube creux, notamment par coulée d'aluminium sous pression, ces tubes creux ont été élargis et forment un contact à complémentarité de forme des tubes creux avec les parois latérales des encoches (14), dans lequel le matériau de conductivité électrique plus petite que celle du tube creux remplit le tube creux et constitue en même temps les anneaux (13) de court-circuit sur les côtés frontaux du rotor (7).

3. Rotor (7) suivant la revendication 2, **caractérisé en ce que** le paquet (8) de tôle se compose, dans la direction axiale, de plusieurs paquets (9, 10, 11, 12) de tôle partiels, qui sont à distance les uns des autres respectivement par un intervalle de refroidissement radial.

4. Rotor (7) suivant la revendication 2 à 3, **caractérisé en ce que** le tube creux a, considéré dans la direction du pourtour, des épaisseurs de paroi différentes.

5. Rotor (7) suivant l'une des revendications précédentes, **caractérisé en ce qu'**au moins certaines des encoches (14) du rotor (8) sont ouvertes en partie au moins par endroit sur leur bord extérieur radialement, en étant tournées notamment vers un entrefer (21) de la machine asynchrone.

6. Machine asynchrone ayant un rotor (7) suivant l'une des revendications 2 à 5 précédentes.

7. Utilisation d'un rotor suivant l'une ou plusieurs des revendications 2 à 5 précédentes dans des moteurs asynchrones, notamment pour l'entraînement de véhicules électriques, des entraînements de traction, des grues, des ascenseurs, des tapis transporteurs ou des centrifugeuses.
